# EUROPEAN PATENT SPECIFICATION

(11) **EP 1 475 943 B1**
(45) Date of publication and mention of the grant of the patent: **10.01.2007**
(21) Application number: 04010719.5
(22) Date of filing: 05.05.2004
(51) Int. Cl.: H04M 1/02

(54) **Portable communication apparatus having improved capability in inputting data**
Tragbares Kommunikationsendgerät mit verbesserter Dateneingabemöglichkeit
Terminal de communication portable avec amélioration de la capabilité d'entrer des données

(30) Priority: 06.05.2003 KR 2003028552; 20.11.2003 KR 2003082781
(43) Date of publication of application: 10.11.2004
(73) Proprietor: SAMSUNG ELECTRONICS CO., LTD., Suwon-si, Gyeonggi-do (KR)
(72) Inventor: Lee, Jong-Seong Samsung Electronics Co., Ltd., Suwon-si Gyeonggi-do (KR); Park, Bum-Soo Samsung Electronics Co., Ltd., Suwon-si Gyeonggi-do (KR)
(74) Representative: Grünecker, Kinkeldey, Stockmair & Schwanhäusser Anwaltssozietät

(56) References cited:
- DE-A- 10 308 903
- PATENT ABSTRACTS OF JAPAN vol. 1997, no. 04, 30 April 1997 (1997-04-30) & JP 8 321863 A (HITACHI LTD), 3 December 1996 (1996-12-03)
- PATENT ABSTRACTS OF JAPAN vol. 2000, no. 23, 10 February 2001 (2001-02-10) & JP 2001 156893 A (NEC SAITAMA LTD), 8 June 2001 (2001-06-08)

## Description

The present invention relates to portable communication apparatuses, which include all types of portable apparatuses, such as palm PCs (personal computers), notebooks, PCS (personal communication service) phones, cellular phones, PDAs (personal digital assistants), HHPs (hand held phones), etc.

In general, a "portable communication apparatus" is an electronic device which can be carried and can perform wireless communication. When considering portability, designs of such portable communication apparatuses are becoming more compact, slim, and light, and also provide multimedia services, having a wider variety of functions. In particular, future portable communication apparatuses are increasing in their multi-functionality and multipurpose utilization, are becoming even more compact and light, and also are being modified to be suitable for various multimedia or Internet environments. Additionally, such portable communication apparatuses are now commonly used by all kinds of people, including men and women, the young and the old alike, throughout the world, and are recognized as an indispensable commodity.

Conventional portable communication apparatuses may be classified into various types according to their appearance, such as bar-type , flip-type, and folder-type. The bar-type portable communication apparatus has a single housing shaped like a bar. The flip-type portable communication apparatus has a flip which is pivotably mounted by a hinge unit to a bar-shaped housing. The folder-type portable communication apparatus has a folder coupled by a hinge unit to a single bar-shaped housing in such a manner that the folder can be rotated in order to be folded against or unfolded from the housing.

Further, the portable communication apparatuses may be classified into neck wearable and wrist wearable types according to the position or the way the device is carried. The neck wearable type communication apparatus is one which a user wears around the neck using a string, while the wrist wearable type communication apparatus is one which a user wears around the wrist.

Additionally, the portable communication apparatuses may be classified into rotation-type and sliding-type according to its opening and closing. In the rotation-type portable communication apparatus, two housings are coupled to each other in a manner where one housing rotates to be opened or closed relative to the other, while facing each other. In the sliding-type portable communication apparatus, two housings are coupled to each other in a manner where one housing slides to be opened or closed relative to the other. These variously classified portable communication apparatuses are well known by those skilled in the art.

Conventional portable communication apparatuses now include a function of transmitting data at a high speed in addition to the basic function of performing voice communication. In response to the increased demand by consumers, portable communication apparatuses now tend to provide a service using a wireless communication technology capable of transmitting data at a high speed. Recent portable communication apparatuses include a camera lens which enables each of the communication apparatuses to capture and transmit an image signal.

Current conventional portable communication apparatuses may have an imbedded or external camera lens or a photographing means which enables a user to capture an image to be sent or saved.

As the world advances in the direction of pursuing multimedia more and more, and now often requires portable communication apparatuses to be used not only for simple voice or image communication but also for Internet communication or transmission of an e-mail, the portable communication apparatus require input of various or complex data. It is in fact inconvenient for a user to input data by means of any of the current portable communication apparatuses. In the apparatus of PATENT ABSTRACTS OF JAPAN vol. 1997, no. 04, 30 April 1997 & JP 8 321863 A (HITACHI LTD), 3 December 1996 (D1), a second case 200 extends perpendicularly with respect to the upper surface of the first case, wherein a key part 208 of it shows horizontally to the user. On the upper surface of a main housing a second key array 110 is arranged. The key-operation of such an apparatus is realized by a conventional key arrangement on the key part 208 and a special key arrangement 110. That is, the (conventional arranged) keys of the key part 208 appears not to be adapted that a user can reach all functions of the mobile communication device only by means of the key part 208. To use the functions which can be reached by means of the key arrangement 110, according to figure in document D1 the user in the worst case has to use both key arrangements 110, 208. The upper surfaces of these key arrangements are arranged perpendicular to each other, wherein, from the user's view, the key arrangement 208 at least partially obscures the key arrangement 110, thereby deteriorating user-operating especially the keys of the key arrangement 110.

Furthermore, a display 300 and the key arrangement 208 appear to be arranged such that their upper surfaces are perpendicular to each other with respect to the user's view to these upper surfaces. The upper surfaces each have a different distance to the eyes of the user (cf. figure in document D1). During key-operation the user enters keys of the key part 208 and, at the same time, has to look to the display to check whether he/she has pressed the desired keys. Consequently, the user must change his/her eye focus when changing the look between key part 208 and display. Such key-operating is inconvenient for the user. Furthermore, in such an arrangement, the user looks to one of the upper surfaces of the display 300 and the key part 208 at an acute angle, thereby making an optical coverage of the respective upper surface difficult and inconvenient.

PATENT ABSTRACTS OF JAPAN vol. 2000, no. 23, 10 February 2001 & JP 2001 156893 A (NEC SAITAMA LTD), 8 June 2001 discloses a cellular phone in which the display system has a vertically long liquid crystal display part provided with a display unit part 3 for rotating the liquid crystal display part from a vertical position to a horizontal position and vice-versa and with a display change-over part 2A for changing-over the display of the liquid crystal display part from the vertical mode to the horizontal mode with the rotation of the display unit part of performing reverse change-over as a unit for the communication apparatus.

A similar solution is known from DE 103 08 903 A1, published on February 26, 2004.

WO 01/84728 relates to a mobile station comprising a main body having a plurality of keys, a first and a second assist keyboard being folded or unfolded centering around hinge joints, the keyboard hinge jointed rotationally on the opposite portions of both sides of the body to a horizontal direction respectively. The upper surfaces of the first and second assist keyboard housings are arranged parallel to the upper surface of the main housing.

It is the object of the present invention to improve the convenience in key operating mobile communication devices.

This object is solved by the subject matter of claim 1. Preferred embodiments are the subject matter of the dependent claims.

In order to accomplish the object and the aspects of the present invention, there is provided a portable communication apparatus capable of facilitating data input, the portable communication apparatus comprising: a main housing having at least one curved step portion; a connection housing connected to the main housing in such a manner that the connection housing can be rotated about a first hinge axis, the connection housing having an antenna unit; a first rotatable housing connected to the connection housing in such a manner that the first rotatable housing can be rotated about a second hinge axis and can approach or move away from the main housing while being opposed to the main housing; and a second rotatable connected to the main housing in such a manner that the second rotatable housing can be rotated about a third hinge axis while being in contact with the main housing.

In accordance with another aspect of the present invention, there is provided a portable communication apparatus capable of facilitating data input, the portable communication apparatus comprising: a main housing having at least one first curved step portion; a first rotatable housing having at least one second curved step portion and being connected to the main housing in such a manner that the first rotatable housing can be rotated about a first hinge axis to approach or move away from the main housing while being opposed to the main housing; a second rotatable housing connected to the main housing in such a manner that the second rotatable housing can be rotated about a second hinge axis while being maintained in contact with the main housing, the second housing having a circumference curved according to a first curvature; and a third rotatable housing connected to the first rotatable housing in such a manner that the third rotatable housing can be rotated about a third hinge axis while being maintained in contact with the first rotatable housing, the third housing having a circumference curved according to a second curvature.

In accordance with another aspect of the present invention, there is provided a portable communication apparatus capable of facilitating data input, the portable communication apparatus comprising: a main housing having at least one curved step portion and including a first key array and a second key array, each of which includes at least one key disposed on an upper surface of the main housing; a connection housing connected to the main housing in such a manner that the connection housing can be rotated about a first hinge axis; a first rotatable housing connected to the main housing in such a manner that the first rotatable housing can be rotated about a second hinge axis and can approach or move away from the main housing while being opposed to the main housing; and a second rotatable housing having opposite sides curved according to a predetermined curvature, the second rotatable housing being connected to the main housing in such a manner that the second rotatable housing can be rotated about a third hinge axis while being constantly in contact with the main housing, the first key array and the second key array being exposed or hidden when the second rotatable housing is rotated on the main housing.

The above features and advantages of the present invention will be more apparent from the following detailed description taken in conjunction with the accompanying drawings, in which:
FIG. 1 is a perspective view of a portable digital communication apparatus in a phone mode according to a first embodiment of the present invention;
FIG. 2 is a plane view of the portable digital communication apparatus shown in FIG. 1;
FIG. 3 is a bottom view of the portable digital communication apparatus shown in FIG. 1;
FIG. 4 is a perspective view of the portable digital communication apparatus according to the first embodiment of the present invention, in which a first rotatable housing of the apparatus has been completely opened;
FIG. 5 is a plane view of the portable digital communication apparatus shown in FIG. 4;
FIG. 6 is a perspective view of the portable digital communication apparatus according to the first embodiment of the present invention, in which a second rotatable housing of the apparatus has been rotated a predetermined angle;
FIG. 7 is a perspective view of the portable digital communication apparatus according to the first embodiment of the present invention, in which a second rotatable housing of the apparatus has been rotated about 90° in a PDA mode;
FIG. 8 is a plane view of the portable digital communication apparatus shown in FIG. 7;
FIG. 9 is a perspective view of a portable digital communication apparatus according to a second embodiment of the present invention, in which a first rotatable housing of the apparatus has been completely opened;
FIG. 10 is a perspective view of the portable digital communication apparatus according to the second embodiment of the present invention, in which a second rotatable housing and a third rotatable housing of the apparatus have been rotated about 90° in a PDA mode;
FIG. 11 is a perspective view of a portable digital communication apparatus according to a third embodiment of the present invention;
FIG. 12 is a perspective view of the portable digital communication apparatus according to the third embodiment of the present invention, in which a first rotatable housing of the apparatus has been completely opened;
FIG. 13 is a perspective view of the portable digital communication apparatus according to the third embodiment of the present invention, in which a first rotatable housing of the apparatus has been completely opened and a second rotatable housing of the apparatus have been rotated about 90°; and
FIG. 14 is a front view of the portable digital communication apparatus shown in FIG. 13.

Hereinafter, preferred embodiments of the present invention will be described with reference to the accompanying drawings. In the following description, a detailed description of known functions and configurations incorporated herein will be omitted when it may obscure the subject matter of the present invention.

It is noted that portable communication apparatuses according to various preferred embodiments of the present invention enable a user to enter various or complex data in a convenient manner. A portable communication apparatus according to an embodiment of the present invention includes a plurality of key arrays disposed thereon. A portable communication apparatus according to the first embodiment of the present invention improves the capability of inputting data, thereby enabling a user to conveniently input the data.

It is noted that each of portable communication apparatuses according to various preferred embodiments of the present invention has at least one rotatable data input unit or rotatable data output unit, which enables a user to conveniently input or review data. The key arrays disposed on the rotatable data input units enable a user to input data using not only one hand, but both hands in a more convenient manner.

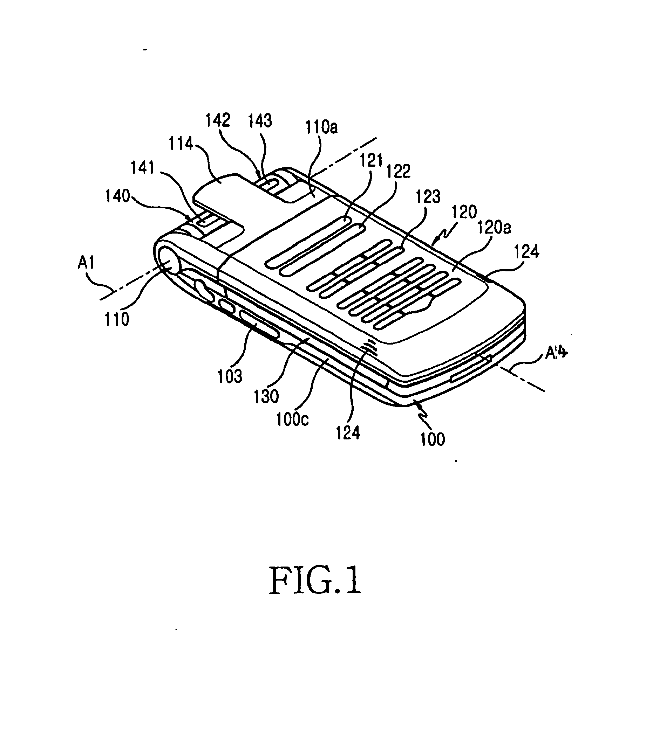

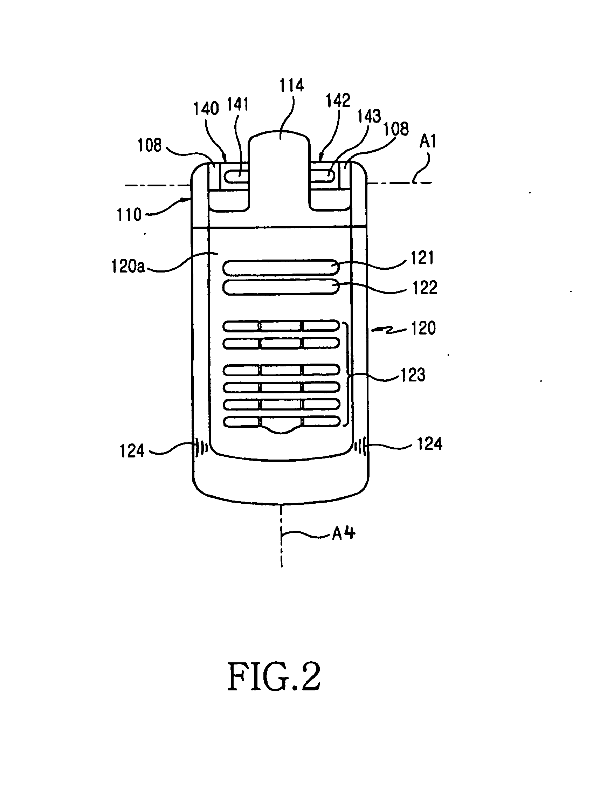

As shown in FIGs. 1 and 2, a portable digital communication apparatus according to the first embodiment of the present invention includes at least five housings rotatably connected with each other.

Specifically, the portable digital communication apparatus includes a main housing 100, a connection housing 110 connected to the main housing 100 in such a manner that the connection housing 110 can be rotated about a first hinge axis A 1, a first rotatable housing 120 connected to the connection housing 110 in such a manner that the first rotatable housing 120 can be rotated about a second hinge axis A4 and can approach or move away from the main housing 100, and a second rotatable housing 130 connected to the main housing 100 in such a manner that the second rotatable housing 130 can be rotated about a third hinge axis A3 while being in contact with the main housing 100. Further, at least one key housing 140 or 142 is disposed coaxially with the first hinge axis A1, and a center housing 112a is disposed between the key housings 140 and 142. A camera lens module is housed in the center housing.

The construction of the second rotatable housing 130 will be described later.

An antenna unit 114 is disposed on an upper surface 110a of the connection housing 110 and extends in a direction over the key housings 140 and 142. The antenna unit 114 extends in the longitudinal direction of the first rotatable housing 120. Further, the key housings 140 and 142 are disposed at both sides of the antenna unit 114. The communication apparatus according to the present embodiment includes a pair of key housings 140 and 142. The key housings 140 and 142 may be fixed in order to simplify the electric connection thereof. FIGs. 1 and 2 show keys 141 and 143 exposed on outer surfaces of the key housings 140 and 142**.** The keys 141 and 143 can be assigned have macro-functions. The key housings 140 and 142 may be either fixed or rotatable with respect to the connection housing 110.

The first rotatable housing 120 includes a first display unit 121, a second display unit 122, a second key array 123, and at least one speaker unit 124, which are disposed on an upper surface 120a of the first rotatable housing 120**.** The second display unit 122 is disposed adjacent to the first display unit 121**.** The second key array 123 includes a plurality of keys arranged adjacently to the second display unit 122. The speaker unit 124 is disposed adjacent to the second key array 123. Preferably, a pair of speaker units 124 are disposed on the upper surface 120a to provide stereo sound. Moreover, the keys of the second key array 123 relate to numbers, and the speaker units 124 are disposed at lateral portions of the upper surface 120a. A first key array not shown in FIGs. 1 and 2 will be described later.

Here, the first display unit 121 and the second display unit 122 display information which is normally frequently checked by a user, specifically, information such as date, time, an icon indicating a quantity of residual charge in a battery, a reception sensibility of an antenna, an icon reporting an arrival of a message, etc. The first and second display units 121 and 122 each can employ an LCD module.

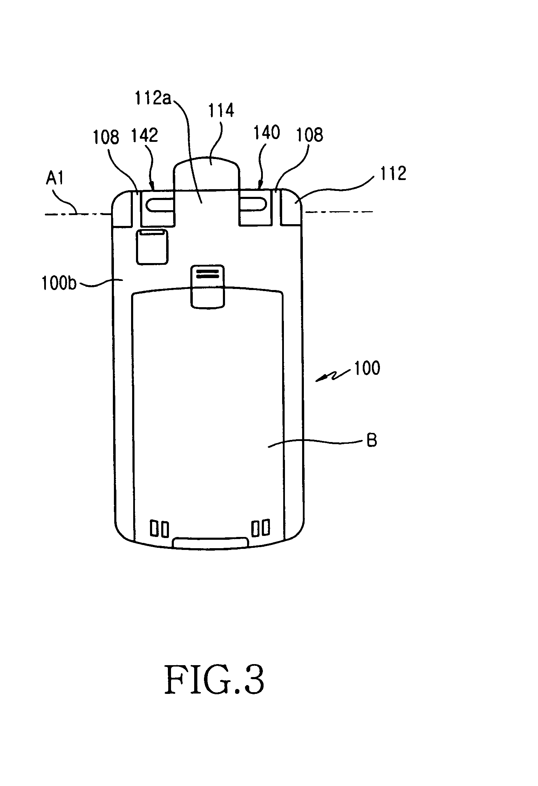

As shown in FIG. 3, a battery (B) is detachably assembled on a lower surface 100b of the main housing 100. The antenna unit 114 extends in a direction in line with the battery when assembled.

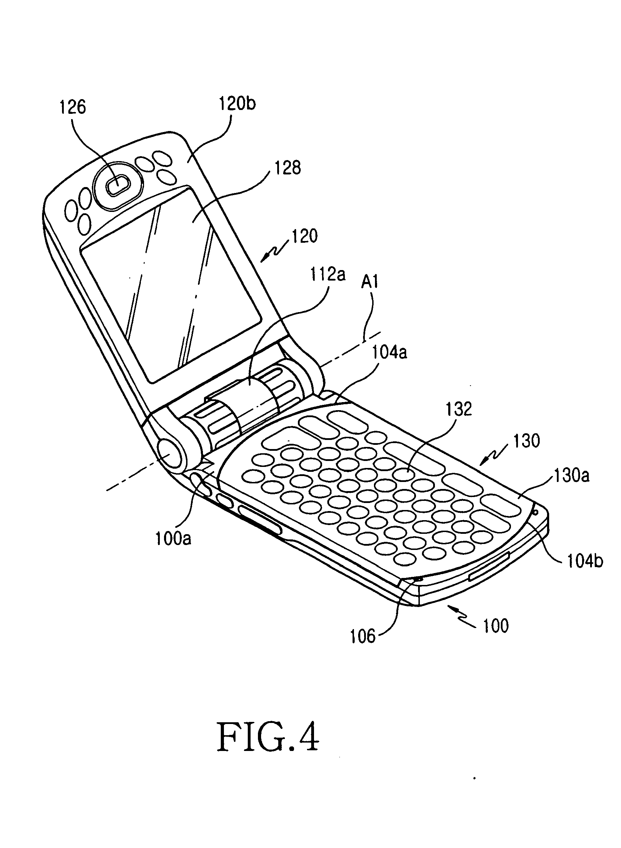

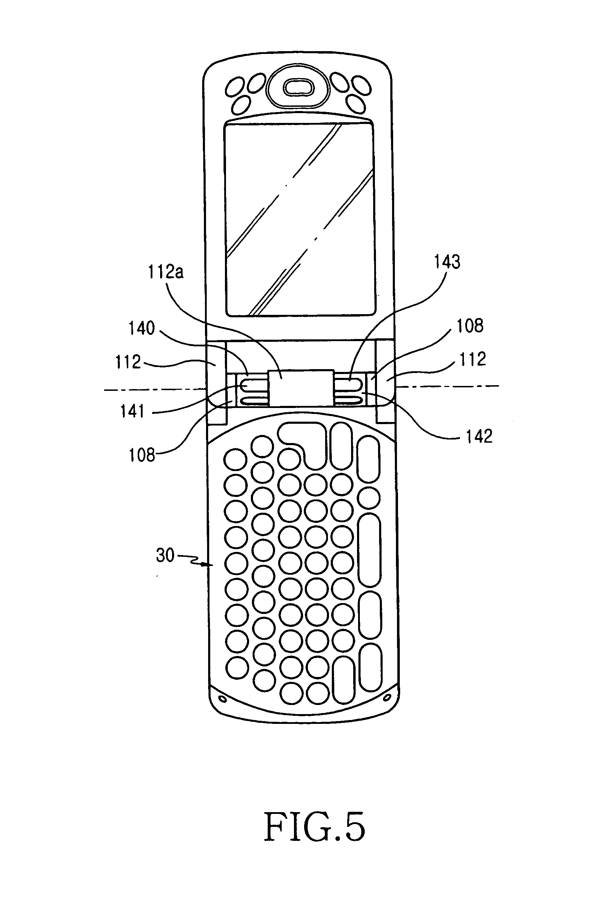

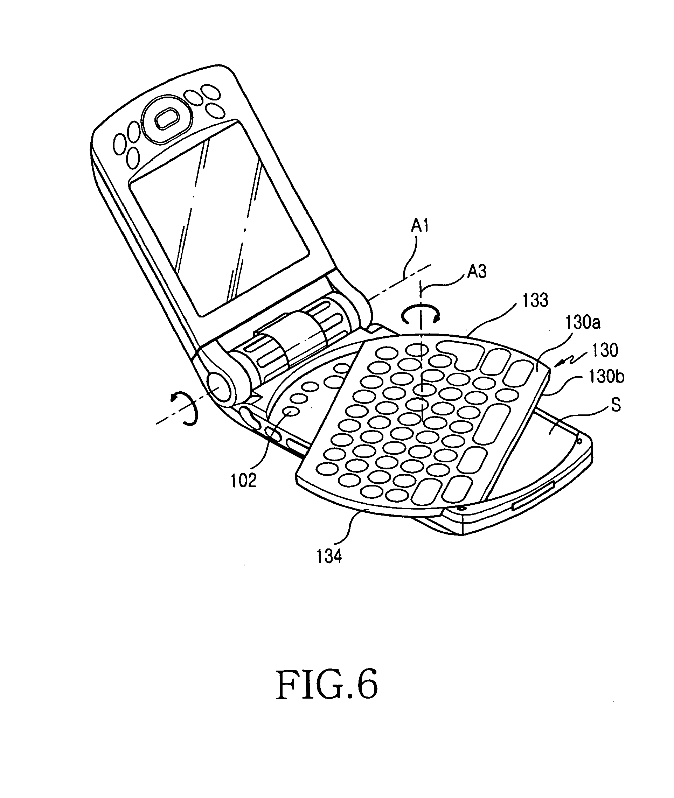

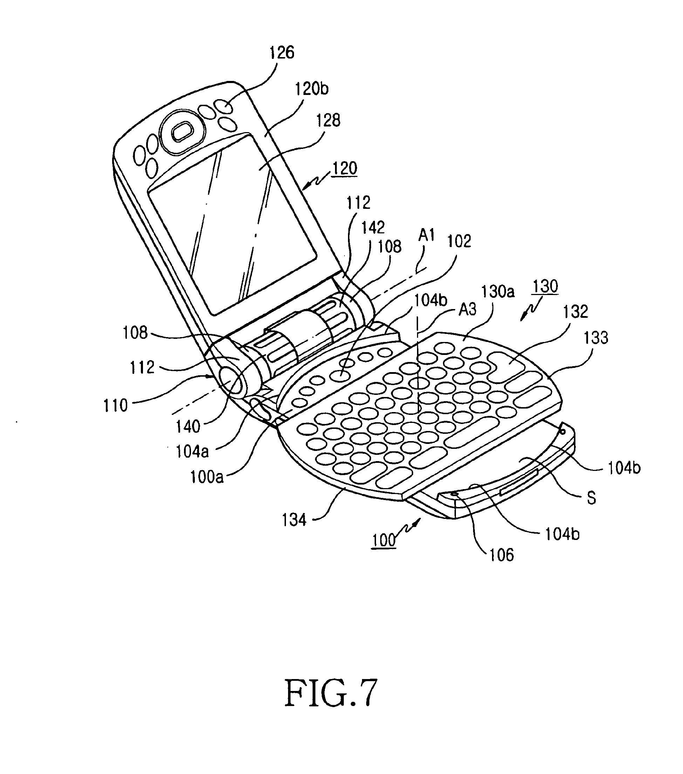

As shown in FIGs. 4 through 8, the main housing 100 has an upper surface 100a, a lower surface 100b (not exposed since it faces toward the back of FIGs. 4 through 8), and at least one curved step portion 104a or 104b. A recess S having a predetermined shape is formed on the upper surface 100a. The recess S has a pair of curved step portions 104a and 104b formed at opposite sides of the recess S. The second rotatable housing 130 is disposed between the curved step portions 104a and 104b, which are apart from and opposed to each other. The curved step portions 104a and 104b are curved according to a predetermined curvature. Further, a first key array 102 (see FIGs. 6 and 7) including a plurality of keys is disposed on the upper surface 100a of the main housing 100, specifically on a bottom surface of the recess S. Further, a microphone unit 106 is disposed on a corner of the upper surface 100a of the main housing 100.

On a lower surface 120b of the first rotatable housing 120, a third key array 126 having a plurality of keys and a third display unit 128 located adjacent to the third key array 126 are disposed. When the first rotatable housing 120 is closed on the main housing 100, the lower surface 120b is located in a position nearest to the curved step portions 104a and 104b and an upper surface 130a of the second rotatable housing 130.

The second rotatable housing 130 has a shape of a plate having the upper surface 130a and a lower surface (not exposed since it faces toward the back of the drawings), and a fourth key array 132 including a plurality of keys is disposed on the upper surface 130a. Further, a lower surface 130b of the second rotatable housing 130 is maintained to be in contact with the upper surface 100a of the main housing 100. Preferably, opposite sides 133 and 134 of the second rotatable housing 130 are curved according to a predetermined curvature. Here, the curvature of the opposite sides 133 and 134 of the second rotatable housing 130 is the same as the curvature of the curved step portions 104a and 104b so as to ensure the second rotatable housing 130 to smoothly rotate while sliding along the curved step portions 104a and 104b of the main housing 100.

From among the curved step portions 104a and 104b, the microphone unit 106 is preferably located nearer to the curved step portion 104b which is farther from the first hinge axis A1 than the curved step portion 104a.

Referring again to FIGs. 2 and 3, the main housing 100 includes a pair of first side hinge arms 108. The connection housing 110 includes a pair of second side hinge arms 112 disposed outside of the first side hinge arms 108.

One key housing 140 is disposed in rotatable contact with one of the first side hinge arms 108, and the other key housing 142 is disposed in rotatable contact with the other of the first side hinge arms 108. Each of the key housing 140 and the key housing 142 has a cylindrical shape.

Referring again to FIG. 1, a fifth key array 103 including a plurality of keys is disposed at a side surface 100c of the main housing 100.

Further, the first hinge axis A1 and the second hinge axis A2 and perpendicular to each other, the first hinge axis A1 and the third hinge axis A3 are perpendicular to each other, and the second hinge axis A2 and the third hinge axis A3 are apart from each other.

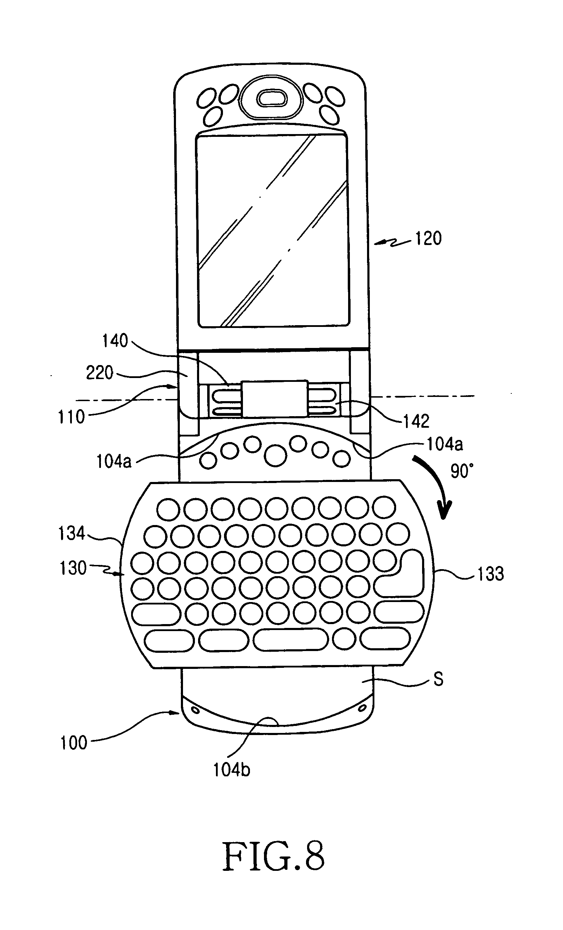

Hereinafter, modes in which a portable communication apparatus according to the present invention is used will be briefly described. FIG. 4 shows a phone mode, in which a user can make a voice communication with a counterpart by means of the portable communication apparatus. In contrast, FIGs. 7 and 8 show a PDA mode, in which the portable communication apparatus can be used as a means through which a user can input complex or various data to surf the Internet or send an e-mail.

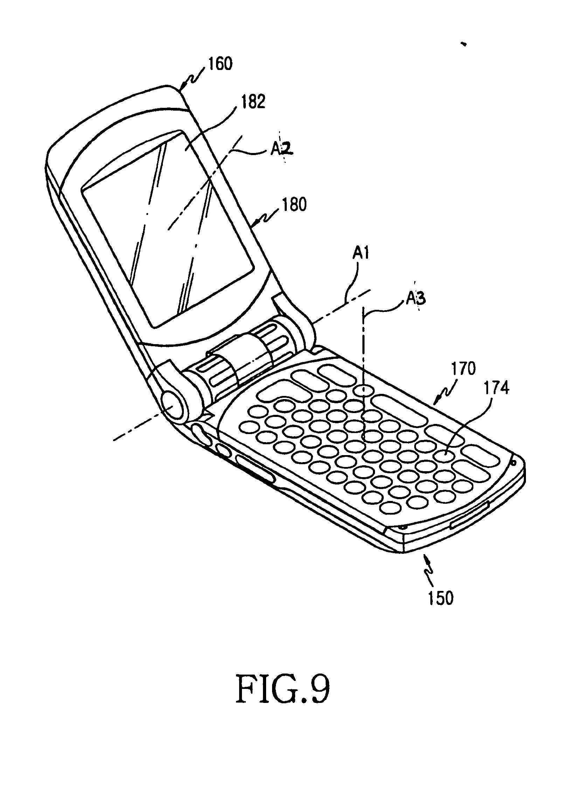

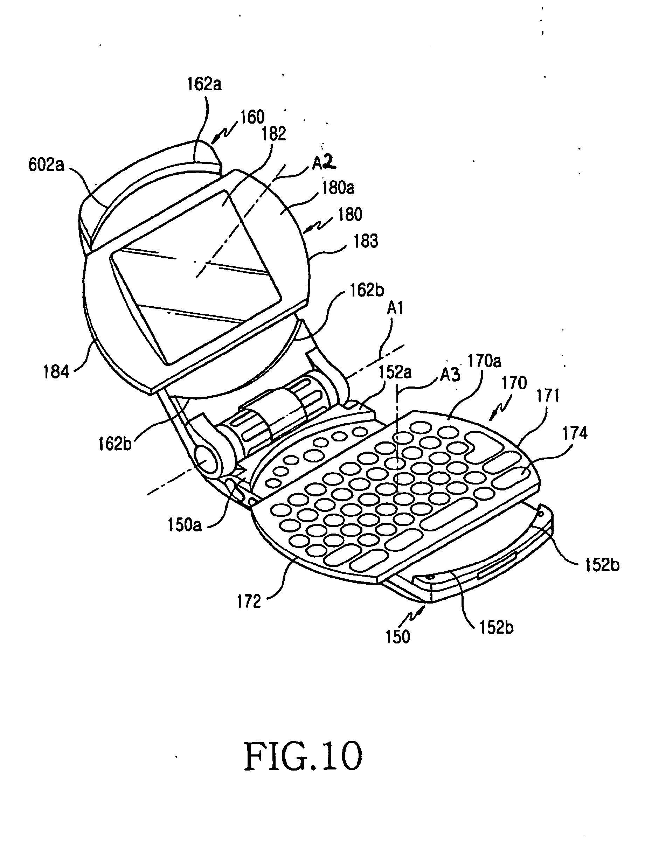

FIGs. 9 and 10 are perspective views of a portable digital communication apparatus according to the second embodiment of the present invention.

As shown in FIGs. 9 and 10, a portable digital communication apparatus according to the second embodiment of the present invention includes a main housing 150 having at least one curved step portion, a first rotatable housing 160 having at least one curved step portion and being connected to the main housing 150 in such a manner that the first rotatable housing 160 can be rotated about a first hinge axis A1 to approach or move away from the main housing 150 while being opposed to the main housing 150, a second rotatable housing 170 connected to the main housing 150 in such a manner that the second rotatable housing 170 can be rotated about a second hinge axis A3 while being maintained in contact with the main housing 150, and a third rotatable housing 180 connected to the first rotatable housing 160 in such a manner that the third rotatable housing 180 can be rotated about a third hinge axis A2 while being maintained in contact with the first rotatable housing 160. The third rotatable housing 180 has opposite sides curved according to a predetermined curvature.

The first hinge axis A1 is apart from and perpendicular to the second and third hinge axes. The second hinge axis A3 extends vertically upward from an upper surface 150a of the main housing 150, and the third hinge axis A3 extends vertically upward from a display unit 182 disposed on a lower surface of the first rotatable housing 160.

Two first curved step portions 152a and 152b opposed to each other are formed on an upper surface 150a of the main housing 150 to provide a space in which the second rotatable housing 170 can be rotated. When the second rotatable housing 170 is rotated, opposite ends 171 and 172 of the second rotatable housing 170 slide along the first curved step portions 152a and 152b.

Two second curved step portions 162a and 162b opposed to each other are formed on a lower surface 160b of the first rotatable housing 160 to provide a space in which the third rotatable housing 180 can be rotated. When the third rotatable housing 180 is rotated, opposite ends 183 and 184 of the third rotatable housing 180 slide along the second curved step portions 162a and 162b.

A key array 174 including a plurality of keys is arranged on an upper surface of the second rotatable housing 170, and a display unit 182 is disposed on an upper surface 180a of the third rotatable housing 180. The display unit 182 may employ an existing LCD module.

It is preferred that the curvature of the first curved step portions 152a and 152b is the same as the curvature of the opposite sides 171 and 172 of the second rotatable housing 170, and that the curvature of the second curved step portions 162a and 162b is the same as the curvature of the opposite sides 183 and 184 of the third rotatable housing 180. This construction facilitates the rotation of the second and third rotatable housings 170 and 180.

The portable communication apparatus according to the second embodiment of the present invention has the same construction as that of the portable communication apparatus according to the first embodiment of the present invention, except for the construction described above relating to the first rotatable housing 160, and therefore a description on the same construction will be omitted.

In a PDA mode, the portable communication apparatus according to the second embodiment of the present invention, which has the construction described above, can be used, after the main housing 150 is completely opened from the first rotatable housing 160 and the second and third rotatable housings 170 and 180 are then rotated 90° but the actual angle of rotation can vary. FIGs. 9 and 10 show an example in which the portable communication apparatus is used in the PDA mode.

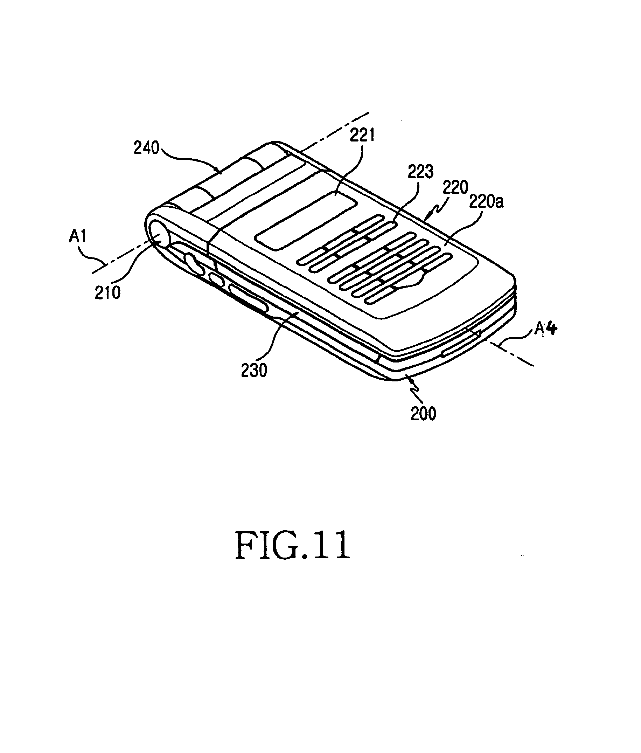

FIGs. 11 through 14 are views showing a portable digital communication apparatus having an improved capability for inputting data, according to the third embodiment of the present invention. Referring to FIGs. 11 through 14, a portable digital communication apparatus according to the third embodiment of the present invention includes a main housing 200, a connection housing 210 connected to the main housing 200 in such a manner that the connection housing 210 can be rotated about a first hinge axis A1, a first rotatable housing 220 connected to the main housing 200 in such a manner that the first rotatable housing 220 can be rotated about a second hinge axis A4 and can approach or move away from the main housing 200, and a second rotatable housing 230 connected to the main housing 200 in such a manner that the second rotatable housing 230 can be rotated about a third hinge axis A3 while being in contact with the main housing 200. Further, an auxiliary housing 240 is disposed coaxially with the first hinge axis A1, and a camera lens module, an IrDA (Infrared Data Association) communication module, or a speaker unit may be housed in the auxiliary housing.

The first rotatable housing 220 includes a first display unit 221 and a third key array 223, which are adjacently disposed on an upper surface 220a of the first rotatable housing 220. The third key array 223 includes a plurality of keys in relation to numbers.

Here, the first display unit 221 displays information to be checked frequently, specifically, information such as date, time, an icon indicating a quantity of residual charge in a battery, a reception sensibility of an antenna, an icon reporting an arrival of a message, etc. The first display unit 221 can employ an LCD module.

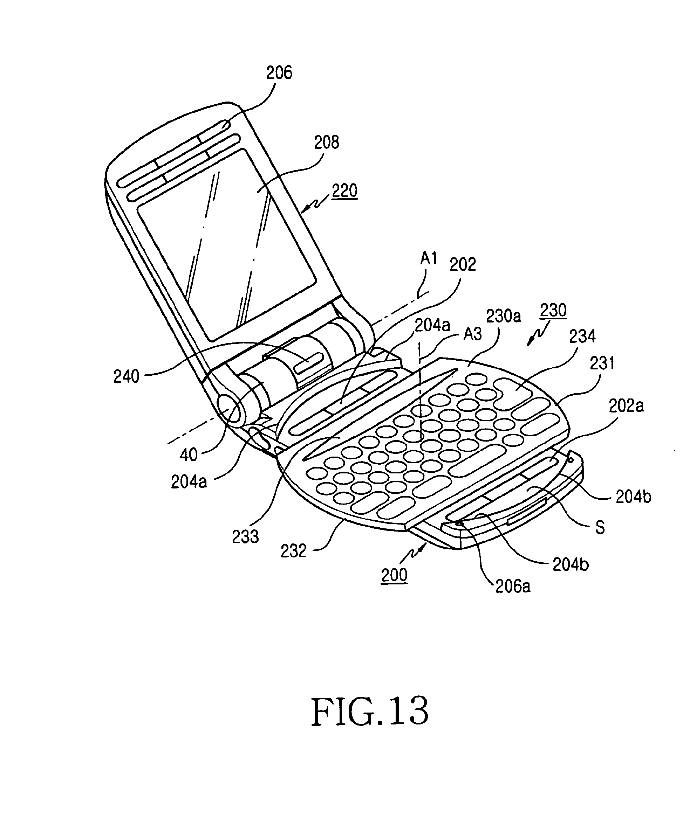

As shown in FIGs. 11 through 14, the main housing 200 has an upper surface 200a, a lower surface 200b (not exposed since it faces toward the back of FIGs. 11 through 14), and at least one curved step portion 204a or 204b. A recess S having a predetermined shape is formed on the upper surface 200a of the main housing 200. The recess S has a pair of curved step portions 204a and 204b formed at opposite sides of the recess S. The second rotatable housing 230 is disposed between the curved step portions 204a and 204b, which are apart from and opposed to each other. The curved step portions 204a and 204b curved according to a predetermined curvature. Further, a first key array 202 and a second key array 202a (see FIG. 13) each including a plurality of keys are disposed on the upper surface 200a of the main housing 200, specifically on a bottom surface of the recess S. Further, a microphone unit 206a is disposed on a corner of the upper surface 200a of the main housing 200. The first and second key arrays 202 and 202a are exposed only when the second rotatable housing 230 has been rotated more than a predetermined angle.

On a lower surface 220b of the first rotatable housing 220, a fourth key array 206 having a plurality of keys and a second display unit 208 located adjacent to the fourth key array 206 are disposed. When the first rotatable housing 220 is closed on the main housing 200, the lower surface 220b of the first rotatable housing 220 is located in a position nearest to the curved step portions 204a and 204b of the main housing 200 and an upper surface 230a of the second rotatable housing 230 while facing them.

The second rotatable housing 230 has a shape of a plate having an upper surface 230a and a lower surface (not exposed since it faces toward the back of the drawings), and a fifth key array 234 including a plurality of keys and a stylus seating groove 233 adjacent to the fifth key array 234 are disposed on the upper surface 230a. Preferably, opposite sides 231 and 232 of the second rotatable housing 230 are curved according to a predetermined curvature. Here, the curvature of the opposite sides 231 and 232 of the second rotatable housing 230 is the same as the curvature of the curved step portions 204a and 204b so as to ensure the second rotatable housing 230 to smoothly rotate while sliding along the curved step portions 204a and 204b of the main housing 200.

From among the curved step portions 204a and 204b, a microphone unit 206a is preferably located nearer to the curved step portion 204b which is farther from the first hinge axis A 1 than the curved step portion 204a.

Further, the first hinge axis A1 and the second hinge axis A4 are perpendicular to each other, the first hinge axis A1 and the third hinge axis A3 are perpendicular to each other, and the second hinge axis A4 and the third hinge axis A3 are apart from each other.

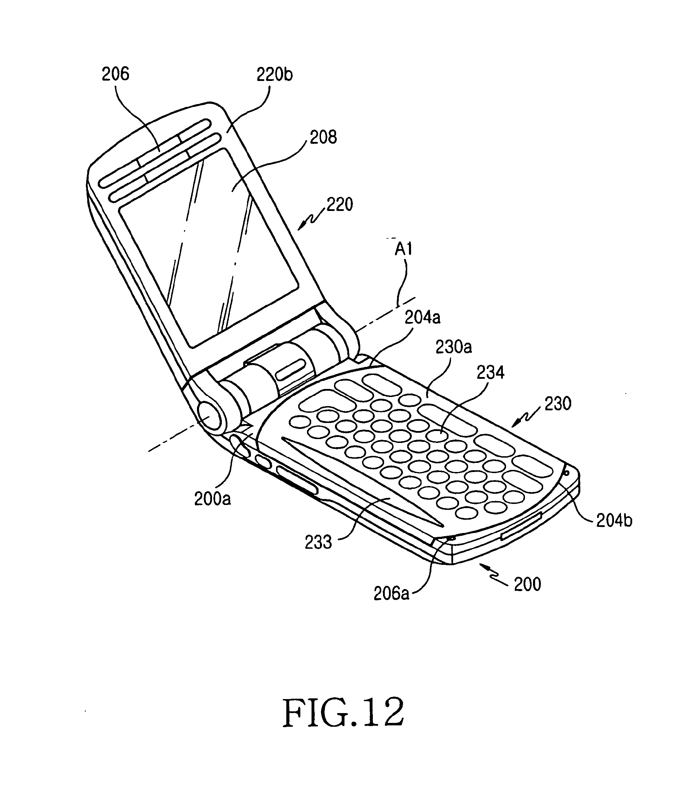

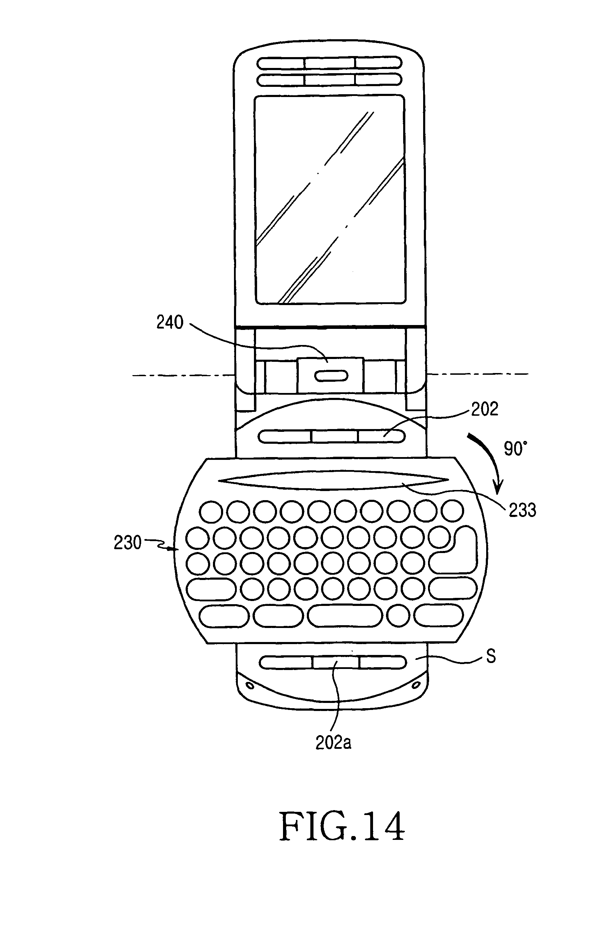

Hereinafter, modes in which a portable communication apparatus according to the third embodiment of the present invention is used will be briefly described. FIG. 12 shows a phone mode, in which a user can make a voice communication with a counterpart by means of the portable communication apparatus. In contrast, FIGs. 13 and 14 show a PDA mode, in which the portable communication apparatus can be used as a means through which a user can input complex or various data, for example, to surf the Internet or send an e-mail.

As described above, a portable communication apparatus according to the present invention enables a user to conveniently input complex data or various data. While the invention has been shown and described with reference to certain preferred embodiments thereof, it will be understood by those skilled in the art that various changes in form and details may be made therein without departing from the scope of the invention as defined by the appended claims. For example, the key housing described above may mount a camera lens and a lighting unit, instead of the keys.

## Claims

1. A portable communication apparatus comprising:
a main housing (100; 150; 200);
a connection housing (110; 210) connected to the main housing (100; 150; 200), the connection housing (110; 210) being rotatable about a first hinge axis (A1);
a first rotatable housing (120; 160; 220) connected to the connection housing (110; 210) or to the main housing (100; 150; 200), the first rotatable housing (120; 160; 220) being rotatable about a second hinge axis (A2) and adapted to approach or move away from the main housing while being opposed to the main housing; and
a second rotatable housing (130; 170; 230) connected to the main housing (100; 150; 200), the second rotatable housing (130; 170; 230) being rotatable about a third hinge axis (A3) while being in contact with the main housing,
wherein the second rotatable housing (130; 170; 230) is arranged in parallel to the upper surface (100A; 150A; 200A) of the main housing (100; 150; 200);
wherein the third hinge axis (A3) is in a central position of the second rotatable housing (130; 170; 230);
wherein the second hinge axis (A2) is in a central position of the first rotatable housing (120; 160; 220).

2. The portable communication apparatus as claimed in claim 1, wherein the connection housing (110; 210) has an antenna unit (114).

3. The portable communication apparatus as claimed in claims 1 or 2,
wherein the first rotable housing (120; 160; 220) is further adapted to be rotatable about a fourth hinge axis (A4), said fourth hinge axis being perpendicular to both said first hinge axis (A1) and said second hinge axis (A2).

4. The portable communication apparatus as claimed in claim 1 or 2,
wherein the main housing (100; 150; 200) has a recess (S) having a predetermined shape.

5. The portable communication apparatus as claimed in claim 4, wherein the recess (S) is curved according to a predetermined curvature.

6. The portable communication apparatus as claimed in one of claims 1 to 5,
wherein the main housing (100; 150; 200) includes a first key array (102; 202) disposed within the recess (S), the first key array (102; 202) including a plurality of keys.

7. The portable communication apparatus as claimed in one of claims 1 to 6,
wherein the first rotatable housing (120; 160; 220) includes:
a first display unit (121; 221);
a second display unit (122; 208) located adjacent to the first display unit (121; 221);
a second key array (126; 206) located adjacent to the second display unit (122; 208) and having a plurality of keys;
a pair of stereo speakers (124) located adjacent to the second key array (126; 206) and at opposite corners of the first rotatable housing (120; 160; 220);
a third key array (125; 223) having a plurality of keys; and
a third display unit (128) located adjacent to the third key array (123; 223),
wherein the first display unit, the second display unit, and the second key array are disposed on an upper surface of the first rotatable housing, and the stereo speakers and the third display unit are disposed on a lower surface of the first rotatable housing.

8. The portable communication apparatus as claimed in one of claims 1 to 7, wherein the second rotatable housing (130; 170; 230) has a fourth key array (132; 174) having a plurality of keys disposed on an upper surface (130a; 230a) of the second rotatable housing.

9. The portable communication apparatus as claimed in one of claims 1 to 8, wherein the first hinge axis (A1) and the second hinge axis (A2) are perpendicular to each other, and the first hinge axis (A1) and the third hinge axis (A3) are perpendicular to each other.

10. The portable communication apparatus as claimed in one of claims 1 to 9, wherein the recess includes a first curved step portion (104a) and a second curved step portion (104b), a microphone unit (106; 206a) is located closer to the first curved step portion (104a) than the second curved step portion (104b), and the first curved step portion (104a) is farther apart from the first hinge axis (A1) than the second curved step portion (104b).

11. The portable communication apparatus as claimed in one of claims 1 to 10, further comprising a pair of key housings (140; 142) coaxially disposed with the first hinge axis (A1), wherein each of the key housings (140; 142) includes keys disposed on an outer surface of the key housing (140; 142) and exposed to an outside of the apparatus.

12. The portable communication apparatus as claimed in one of claims 1 to 11, wherein the second rotatable housing (130; 170; 230) has a shape of a plate.

13. The portable communication apparatus as claimed in claim 1, wherein the main housing (100; 150; 200) includes a first key array (102; 202) and a second key array (202a), each of which includes at least one key disposed on an upper surface (130a; 230a) of the main housing (100; 150; 200).

14. The portable communication apparatus as claimed in claim 13, wherein said second rotatable housing (130; 170; 230) has opposite sides curved according to a predetermined curvature.

15. The portable communication apparatus as claimed in claim 14, wherein the first key array and the second key array are exposed or hidden when the second rotatable housing (130; 170; 230) is rotated on the main housing.

16. The portable communication apparatus as claimed in claim 15, wherein the second rotatable housing (130; 170; 230) includes a third key array and a stylus seating groove, which are disposed adjacent to each other on an upper surface of the second rotatable housing (130; 170; 230).

17. The portable communication apparatus as claimed in claims 15 or 16, further comprising an auxiliary housing for receiving an IrDA communication module, which is disposed coaxially with the first hinge axis (A1).

## Patentansprüche

1. Eine tragbare Kommunikationsvorrichtung, beinhaltend:
ein Hauptgehäuse (100; 150; 200);
ein Verbindungsgehäuse (110; 210), welches mit dem Hauptgehäuse (100; 150; 200) verbunden ist, wobei das Verbindungsgehäuse (110; 210) um eine erste Drehachse (A1) drehbar ist;
ein erstes drehbares Gehäuse (120; 160; 220), welches mit dem Verbindungsgehäuse (110; 210) oder dem Hauptgehäuse (100; 150; 200) verbunden ist, wobei das erste drehbare Gehäuse (120; 160; 220) um eine zweite Drehachse (A2) drehbar ist und eingerichtet ist, um sich dem Hauptgehäuse zu nähern oder sich von dem Hauptgehäuse weg zu bewegen während dieses dem Hauptgehäuse gegenüber liegt; und
ein zweites drehbares Gehäuse (130; 170; 230), welches mit dem Hauptgehäuse (100; 150; 200) verbunden ist, wobei das zweite drehbare Gehäuse (130; 170; 230) um eine dritte Drehachse (A3) drehbar ist, während dieses mit dem Hauptgehäuse in Kontakt ist,
wobei das zweite drehbare Gehäuse (130; 270; 230) parallel zu der oberen Oberfläche (100A; 150A; 200A) des Hauptgehäuses (100; 150; 200) angeordnet ist;
wobei die dritte Drehachse (A3) in einer mittigen Position des zweiten drehbaren Gehäuses (130; 170; 230) ist;
wobei die zweite Drehachse (A2) in einer mittigen Position des ersten drehbaren Gehäuses (120; 160; 220) ist.

2. Die tragbare Kommunikationsvorrichtung gemäß Anspruch 1, wobei das Verbindungsgehäuse (110; 210) eine Antennenbaugruppe (114) aufweist.

3. Die tragbare Kommunikationsvorrichtung gemäß den Ansprüchen 1 oder 2, wobei das erste drehbare Gehäuse (120; 160; 220) weiterhin eingerichtet ist, um um eine vierte Drehachse (A4) drehbar zu sein, besagte vierte Drehachse ist senkrecht zu besagter erster Drehachse (A1) und besagter zweiter Drehachse (A2).

4. Die tragbare Kommunikationsvorrichtung gemäß den Ansprüchen 1 oder 2, wobei das Hauptgehäuse (100; 150; 200) eine Aussparung (S) mit einer vorbestimmten Form aufweist.

5. Die tragbare Kommunikationsvorrichtung gemäß Anspruch 4, wobei die Aussparung (S) gemäß einer vorbestimmten Krümmung gekrümmt ist.

6. Die tragbare Kommunikationsvorrichtung gemäß einem der Ansprüche 1 bis 5,
wobei das Hauptgehäuse (100; 150; 200) ein erstes Tastenfeld (102; 202) beinhaltet, welches in der Aussparung (S) angeordnet ist, wobei das erste Tastenfeld (102; 202) eine Vielzahl von Tasten beinhaltet.

7. Die tragbare Kommunikationsvorrichtung gemäß einem der Ansprüche 1 bis 6,
wobei das erste drehbare Gehäuse (120; 160; 220) beinhaltet:
eine erste Anzeigebaugruppe (121; 221);
eine zweite Anzeigebaugruppe (122; 208), welche angrenzend an die erste Anzeigebaugruppe (121; 221) angeordnet ist;
ein zweites Tastenfeld (126; 206), welches angrenzend an die zweite Anzeigebaugruppe (122; 208) angeordnet ist und ein Vielzahl von Tasten besitzt;
ein Paar von Stereolautsprechern (124), welche angrenzend an das zweite Tastenfeld (126; 206) und in gegenüberliegenden Ecken des ersten drehbaren Gehäuses (120; 160; 220) angeordnet ist;
ein drittes Tastenfeld (125; 223), welches eine Vielzahl von Tasten besitzt; und
eine dritte Anzeigebaugruppe (128), welche angrenzend an das dritte Tastenfeld (123; 223) angeordnet ist,
wobei die erste Anzeigebaugruppe, die zweite Anzeigebaugruppe und das zweite Tastenfeld auf einer oberen Oberfläche des ersten drehbaren Gehäuses angeordnet sind und die Stereolautsprecher und die dritte Anzeigebaugruppe auf einer unteren Oberfläche des ersten drehbaren Gehäuses angeordnet sind.

8. Die tragbare Kommunikationsvorrichtung gemäß einem der Ansprüche 1 bis 7,
wobei das zweite drehbare Gehäuse (130; 170; 230) ein viertes Tastenfeld (132; 174) aufweist, welches eine Vielzahl von Tasten besitzt, welche auf einer oberen Oberfläche (130a; 230a) des zweiten drehbaren Gehäuses angeordnet sind.

9. Die tragbare Kommunikationsvorrichtung gemäß einem der Ansprüche 1 bis 8,
wobei die erste Drehachse (A1) und die zweite Drehachse (A2) senkrecht zueinander sind, und die erste Drehachse (A1) und die dritte Drehachse (A3) senkrecht zueinander sind.

10. Die tragbare Kommunikationsvorrichtung gemäß einem der Ansprüche 1 bis 9,
wobei die Aussparung einen ersten gekrümmten gestuften Teilbereich (104a) und einen zweiten gekrümmten gestuften Teilbereich (104b) beinhaltet, eine Mikrofonbaugruppe (106; 206a) derart angeordnet ist, dass diese näher an dem ersten gekrümmten gestuften Teilbereich (1 04a) als an dem zweiten gekrümmten gestuften Teilbereich (104b) ist, und der erste gekrümmte gestufte Teilbereich (104a) weiter von der ersten Drehachse (A1) entfernt ist als der zweite gekrümmte gestufte Teilbereich (104b).

11. Die tragbare Kommunikationsvorrichtung gemäß einem der Ansprüche 1 bis 10, weiterhin ein Paar von Tastengehäusen (140; 142) beinhaltend, welche koaxial mit der ersten Drehachse (A1) angeordnet sind, wobei jedes der Tastengehäuse (140; 142) Tasten beinhaltet, welche auf einer äußeren Oberfläche des Tastengehäuses (140; 142) angeordnet sind und auf einer Außenseite der Vorrichtung freiliegen.

12. Die tragbare Kommunikationsvorrichtung gemäß einem der Ansprüche 1 bis 11,
wobei das zweite drehbare Gehäuse (130; 170; 230) die Form einer Platte hat.

13. Die tragbare Kommunikationsvorrichtung gemäß Anspruch 1, wobei das Hauptgehäuse (100; 150; 200) ein erstes Tastenfeld (102; 202) und ein zweites Tastenfeld (202a) beinhaltet, wobei jedes mindestens eine Taste beinhaltet, welche auf einer oberen Oberfläche (130a; 230a) des Hauptgehäuses (100; 150; 200) angeordnet ist.

14. Die tragbare Kommunikationsvorrichtung gemäß Anspruch 13, wobei besagtes zweites drehbares Gehäuse (130; 170; 230) gegenüberliegende Seiten aufweist, welche gemäß einer vorherbestimmten Krümmung gekrümmt sind.

15. Die tragbare Kommunikationsvorrichtung gemäß Anspruch 14, wobei das erste Tastenfeld und das zweite Tastenfeld freigelegt oder verborgen sind, wenn das zweite drehbare Gehäuse (130; 170; 230) auf das Hauptgehäuse gedreht ist.

16. Die tragbare Kommunikationsvorrichtung gemäß Anspruch 15, wobei das zweite drehbare Gehäuse (130; 170; 230) ein drittes Tastenfeld und eine Stiftaufnahmenut beinhaltet, welche aneinander angrenzend auf einer oberen Oberfläche des zweiten drehbaren Gehäuses (130; 170; 230) angeordnet sind.

17. Die tragbare Kommunikationsvorrichtung gemäß den Ansprüchen 15 oder 16, weiterhin beinhaltend ein Hilfsgehäuse für das Aufnehmen eines IrDA-Kommunikationsmoduls, welches koaxial mit der ersten Drehachse (A1) angeordnet ist.

## Revendications

1. Appareil de communication portable comprenant :
un logement principal (100 ; 150 ; 200) ;
un logement de raccordement (110 ; 210) raccordé au logement principal (100 ; 150 ; 200), le logement de raccordement (110 ; 210) pouvant tourner autour d'un premier axe d'articulation (A1) ;
un premier logement rotatif (120 ; 160 ; 220) raccordé au logement de raccordement (110 ; 210) ou au logement principal (100 ; 150 ; 200), le premier logement rotatif (120 ; 160 ; 220) pouvant tourner autour d'un deuxième axe d'articulation (A2) et étant adapté pour se rapprocher ou s'éloigner du logement principal, tout en s'opposant au logement principal ; et
un deuxième logement rotatif (130 ; 170 ; 230) raccordé au logement principal (100 ; 150 ; 200), le deuxième logement rotatif (130 ; 170 ; 230) pouvant tourner autour d'un troisième axe d'articulation (A3) tout en étant en contact avec le logement principal,
dans lequel le deuxième logement rotatif (130 ; 170 ; 230) est agencé parallèlement à la surface supérieure (100A ; 150A ; 200A) du logement principal (100 ; 150 ; 200) ;
dans lequel le troisième axe d'articulation (A3) est dans une position centrale du deuxième logement rotatif (130 ; 170 ; 230) ;
dans lequel le deuxième axe d'articulation (A2) est dans une position centrale du premier logement rotatif (120 ; 160 ; 220).

2. Appareil de communication portable selon la revendication 1, dans lequel le logement de raccordement (110 ; 210) possède une unité d'antenne (114).

3. Appareil de communication portable selon la revendication 1 ou 2, dans lequel le premier logement rotatif (120 ; 160 ; 220) est en outre adapté pour pouvoir tourner autour d'un quatrième axe d'articulation (A4), ledit quatrième axe d'articulation étant à la fois perpendiculaire audit premier axe d'articulation (A1) et audit deuxième axe d'articulation (A2).

4. Appareil de communication portable selon la revendication 1 ou 2, dans lequel le logement principal (100 ; 150 ; 200) possède un évidement (S) ayant une forme prédéterminée.

5. Appareil de communication portable selon la revendication 4, dans lequel l'évidement (S) est incurvé selon une courbure prédéterminée.

6. Appareil de communication portable selon l'une des revendications 1 à 5, dans lequel le logement principal (100 ; 150 ; 200) comprend un premier groupe de touches (102 ; 202) disposé dans l'évidement (S), le premier groupe de touches (102 ; 202) comprenant une pluralité de touches.

7. Appareil de communication portable selon l'une des revendications 1 à 6, dans lequel le premier logement rotatif (120 ; 160 ; 220) comprend :
une première unité d'affichage (121 ; 221) ;
une deuxième unité d'affichage (122 ; 208) adjacente à la première unité d'affichage (121 ; 221) ;
un deuxième groupe de touches (126 ; 206) adjacent à la deuxième unité d'affichage (122 ; 208) et possédant une pluralité de touches ;
une paire de haut-parleurs stéréo (124) adjacents au deuxième groupe de touches (126 ; 206) et au niveau des coins opposés du premier logement rotatif (120 ; 160 ; 220) ;
un troisième groupe de touches (125 ; 223) possédant une pluralité de touches ; et
une troisième unité d'affichage (128) adjacente au troisième groupe de touches (123 ; 223),
dans lequel la première unité d'affichage, la deuxième unité d'affichage et le deuxième groupe de touches sont disposés sur une surface supérieure du premier logement rotatif, et les haut-parleurs stéréo et la troisième unité d'affichage sont disposés sur une surface inférieure du premier logement rotatif.

8. Appareil de communication portable selon l'une des revendications 1 à 7, dans lequel le deuxième logement rotatif (130 ; 170 ; 230) possède un quatrième groupe de touches (132 ; 174) comportant une pluralité de touches disposé sur une surface supérieure (130a ; 230a) du deuxième logement rotatif.

9. Appareil de communication portable selon l'une des revendications 1 à 8, dans lequel le premier axe d'articulation (A1) et le deuxième axe d'articulation (A2) sont perpendiculaires l'un à l'autre, et le premier axe d'articulation (A1) et le troisième axe d'articulation (A3) sont perpendiculaires l'un à l'autre.

10. Appareil de communication portable selon l'une des revendications 1 à 9, dans lequel l'évidement comprend une première partie de niveau incurvée (104a) et une deuxième partie de niveau incurvée (104b), une unité de microphone (106 ; 206a) est située plus près de la première partie de niveau incurvée (104a) que de la deuxième partie de niveau incurvée (104b), et la première partie de niveau incurvée (104a) est plus éloignée du premier axe d'articulation (A1) que la deuxième partie de niveau incurvée (104b).

11. Appareil de communication portable selon l'une des revendications 1 à 10, comprenant en outre une paire de logements de touches (140 ; 142) disposés de manière coaxiale avec le premier axe d'articulation (A1), dans lequel chacun des logements de touches (140 ; 142) comprend des touches disposées sur une surface extérieure du logement de touches (140 ; 142) et exposées vers un extérieur de l'appareil.

12. Appareil de communication portable selon l'une des revendications 1 à 11, dans lequel le deuxième logement rotatif (130 ; 170 ; 230) a la forme d'une plaque.

13. Appareil de communication portable selon la revendication 1, dans lequel le logement principal (100 ; 150 ; 200) comprend un premier groupe de touches (102 ; 202) et un deuxième groupe de touches (202a), chacun comprenant au moins une touche disposée sur une surface supérieure (130a ; 230a) du logement principal (100 ; 150 ; 200).

14. Appareil de communication portable selon la revendication 13, dans lequel ledit deuxième logement rotatif (130 ; 170 ; 230) possède des côtés opposés incurvés selon une courbure prédéterminée.

15. Appareil de communication portable selon la revendication 14, dans lequel le premier groupe de touches et le deuxième groupe de touches sont exposés ou cachés lorsque le deuxième logement rotatif (130 ; 170 ; 230) tourne sur le logement principal.

16. Appareil de communication portable selon la revendication 15, dans lequel le deuxième logement rotatif (130 ; 170 ; 230) comprend un troisième groupe de touches et une rainure de pose de stylet, adjacents l'un à l'autre sur une surface supérieure du deuxième logement rotatif (130 ; 170 ; 230).

17. Appareil de communication portable selon la revendication 15 ou 16, comprenant en outre un logement auxiliaire destiné à recevoir un module de communication IrDA, qui est disposé de manière coaxiale avec le premier axe d'articulation (A1).
